# EUROPEAN PATENT APPLICATION

(11) **EP 4 773 407 A1**
(43) Date of publication of application: **08.07.2026**
(21) Application number: 24859198.4
(22) Date of filing: 16.07.2024
(51) Int. Cl.: H01M 50/533, H01M 10/04, H01M 10/0587, H01M 50/107, H01M 50/548

(54) **CYLINDRICAL BATTERY**

(30) Priority: 31.08.2023 JP 2023140693
(71) Applicant: Panasonic Intellectual Property Management Co., Ltd., Kadoma-shi, Osaka 571-0057 (JP)
(72) Inventor: IIDA, Yuki, Osaka 571-0057 (JP)
(74) Representative: Eisenführ Speiser
(86) International application number: PCT/JP2024/025463
(87) International publication number: WO 2025/047154

(57) **Abstract**

A battery (10) is provided with a first negative electrode lead (21a) and a second negative electrode lead (21b) joined to a negative electrode (12). A laminated part (50) in which the first negative electrode lead (21a) and the second negative electrode lead (21b) are laminated in the axial direction in a state in which the first negative electrode lead (21a) is positioned on an electrode body (14) side is formed between the electrode body (14) and a bottom portion part (31) of an outer can (16). The laminated part (50) is welded to the bottom portion part (31) of the outer can (16). A first thickness (t1) of the first negative electrode lead (21a) in the laminated part (50) is larger than a second thickness (t2) of the second negative electrode lead (21b) in the laminated part (50).

## Description

### TECHNICAL FIELD

The present disclosure relates to a cylindrical battery.

### BACKGROUND ART

Conventional cylindrical batteries include one disclosed in PATENT LITERATURE 1. This cylindrical battery comprises an electrode assembly in which a positive electrode and a negative electrode are wound with a separator interposed therebetween, a bottomed cylindrical housing can that houses the electrode assembly, and a sealing assembly that is crimp-fixed to an opening portion of the housing can via a gasket. The positive electrode and an inner surface of the sealing assembly are electrically connected to each other via a positive electrode lead. One end portion of an inner peripheral-side negative electrode lead is connected to a winding start-side end portion of the negative electrode, and one end portion of an outer peripheral-side negative electrode lead is connected to a winding finish-side end portion of the negative electrode.

Each of the inner peripheral-side negative electrode lead and the outer peripheral-side negative electrode lead is bent toward a radially inner side after extending in an axial direction toward a bottom portion side of a housing can. The other end portion of the inner peripheral-side negative electrode lead and the other end portion of the outer peripheral-side negative electrode lead are stacked along a bottom surface of the bottom portion of a housing can. A stacked portion of the two negative electrode leads and the bottom portion of the housing can are welded by means of resistance welding. In this cylindrical battery, each of the inner peripheral-side negative electrode lead and the outer peripheral-side negative electrode lead is electrically connected to the bottom portion of the housing can, so that a current collecting path can be shortened, and an electrical resistance can be reduced.

### CITATION LIST

### PATENT LITERATURE

PATENT LITERATURE 1: Japanese Unexamined Patent Application Publication No. 2013-016328

### SUMMARY

In the above-described cylindrical battery, it is necessary to weld the stacked portion of the two negative electrode leads to the bottom portion of the housing can, and also to weld the two negative electrode leads in the stacked portion to each other. For example, when a stacked portion of two negative electrode leads is welded to a bottom portion of a housing can by using a resistance welder, stricter welding conditions than those in the case of one negative electrode lead being welded to the bottom portion of the housing can are required, such as causing larger current to flow between the stacked portion and the bottom portion of the housing can via the two electrodes (welding rods).

However, the present inventors have found that it is not easy to appropriately weld the stacked portion to the bottom portion of the housing can because the negative electrode leads tend to stick to an electrode (welding rod) of the resistance welder only by making the welding conditions simply strict. An object of the present disclosure is to provide a cylindrical battery that allows a stacked portion of two negative electrode leads to be appropriately and easily welded to a bottom portion of a housing can.

In order to solve the above-described problem, a cylindrical battery of the present disclosure comprises an electrode assembly in which a positive electrode and a negative electrode are wound with a separator interposed between the positive electrode and the negative electrode, a bottomed cylindrical housing can that houses the electrode assembly, a sealing assembly that is crimp-fixed to an opening portion of the housing can via a gasket, and a first negative electrode lead and a second negative electrode lead that are joined to the negative electrode, in which a stacked portion in which the first negative electrode lead and the second negative electrode lead are stacked in an axial direction with the first negative electrode lead located on a side of the electrode assembly is formed between the electrode assembly and a bottom portion of the housing can, the stacked portion is welded to the bottom portion of the housing can, and a first thickness of the first negative electrode lead in the stacked portion is larger than a second thickness of the second negative electrode lead in the stacked portion.

According to the cylindrical battery according to the present disclosure, the stacked portion of the two negative electrode leads are appropriately and easily welded to the bottom portion of the housing can.

### BRIEF DESCRIPTION OF DRAWING

FIG. 1 is an axial sectional view of a cylindrical battery according to one embodiment of the present disclosure.
FIG. 2 is an expanded sectional view of the vicinity of a stacked portion in FIG. 1.
FIG. 3 is an expanded axial sectional view of the vicinity of a stacked portion in a battery of a modification.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. In addition, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of the embodiment, whereas the cylindrical battery of the present disclosure is not limited thereto, and the electrolyte may be an aqueous electrolyte.

It is contemplated from the beginning that an altered embodiment may be constructed by appropriately combining characteristic portions of the embodiment and a modification which are described below. In the following embodiment, the same components are denoted by the same reference numerals in the drawings, and duplicate descriptions are omitted. Schematic diagrams are included in a plurality of drawings, and the dimensional ratios of lengths, widths, heights, or the like in each member are not necessarily the same between different drawings. In this specification, the sealing assembly 17 side in the axial direction (height direction) of the cylindrical battery 10 is defined as "upper", and a bottom portion 31 side of the housing can 16 in the axial direction is defined as "lower". Of the components described below, components that are not described in the independent claim indicating the highest level concept are arbitrary components, and are not essential components.

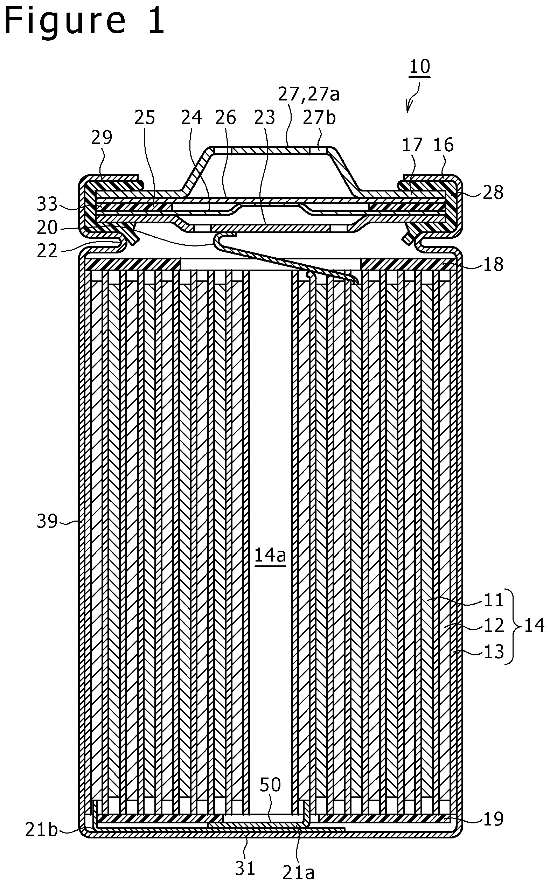

FIG. 1 is an axial sectional view of the cylindrical battery 10 according to one embodiment of the present disclosure. As illustrated in FIG. 1, the cylindrical battery 10 includes an electrode assembly 14, a bottomed cylindrical housing can 16 that houses the electrode assembly 14, and a sealing assembly 17 that is crimp-fixed to an opening portion of the housing can 16 via a gasket 28. The housing can 16 houses a non-aqueous electrolyte together with the electrode assembly 14. The housing can 16 has a shoulder portion 29 at an upper end portion thereof, the shoulder portion 29 being bent toward a radially inner side and extending toward the inner side. The housing can 16 has a grooved portion 22 formed in a side wall, and the sealing assembly 17 is supported by the grooved portion 22 via the gasket 28.

The gasket 28 is a ring-shaped resin member to be attached to an outer peripheral portion of the sealing assembly 17, and is interposed between the housing can 16 and the sealing assembly 17. The gasket 28 is filled into a gap between the housing can 16 and the sealing assembly 17 to seal the inside of the battery, and insulates the sealing assembly 17 from the housing can 16. The gasket 28 is made of, for example, polyolefin.

The non-aqueous electrolyte has ion conductivity (for example, lithium ion conductivity). The non-aqueous electrolyte may be a liquid electrolyte (electrolyte solution), and may be a solid-state electrolyte. The liquid electrolyte (electrolyte solution) includes a non-aqueous solvent, and an electrolyte salt dissolved in the non-aqueous solvent. For the non-aqueous solvent, for example, esters, ethers, nitriles, amides, or mixed solvents of two of more of these are used. Examples of the non-aqueous solvent include ethylene carbonate (EC), ethylmethyl carbonate (EMC), dimethyl carbonate (DMC), diethyl carbonate (DEC), and mixed solvents of these. The non-aqueous solvent may contain a halogen-substituted product (for example, fluoroethylene carbonate) obtained by substituting at least a part of hydrogen in these solvents with a halogen atom such as fluorine. For the electrolyte salt, for example, a lithium salt such as LiPF₆ is used.

As a solid-state electrolyte, for example, a solid-state or gel-state polymer electrolyte, an inorganic solid-state electrolyte, or the like is used. The polymer electrolyte includes, for example, a lithium salt and a matrix polymer, or a non-aqueous solvent, a lithium salt, and a matrix polymer. As the matrix polymer, for example, a polymer material which absorbs and gels the non-aqueous solvent is used. As the polymer material, for example, fluororesin, acrylic resin, or polyether resin is used. As the inorganic solid-state electrolyte, for example, a material known in an all-solid-state lithium ion secondary battery and the like (for example, an oxide-based solid-state electrolyte, a sulfide-based solid-state electrolyte, and a halide-based solid-state electrolyte) is used.

The electrode assembly 14 has a positive electrode 11, a negative electrode 12, and a separator 13, and has a wound structure in which the positive electrode 11 and the negative electrode 12 are spirally wound with the separator 13 interposed therebetween. Each of the positive electrode 11, the negative electrode 12, and the separator 13 is a bandshaped elongate body, and the positive electrode 11, the negative electrode 12, and the separator 13 are spirally wound so as to be alternately stacked in a radial direction of the electrode assembly 14. The negative electrode 12 is formed to be one size larger than the positive electrode 11 in order to prevent precipitation of lithium. That is, the negative electrode 12 is formed to be longer in the longitudinal direction and the width direction than the positive electrode 11. The two separators 13 are each formed to be one size larger than at least the positive electrode 11, and are disposed so as to interpose, for example, the positive electrode 11 therebetween.

The positive electrode 11 has a positive electrode core, and a positive electrode mixture layer formed on at least one surface of the positive electrode core. For the positive electrode core, a foil of metal such as aluminum or an aluminum alloy, which is stable within a potential range of the positive electrode 11, a film in which such a metal is disposed on a surface layer thereof, or the like can be used. The positive electrode mixture layer includes a positive electrode active material, a conductive agent such as acetylene black, and a binder such as polyvinylidene fluoride (PVdF), and is preferably formed on each surface of the positive electrode core. For the positive electrode active material, for example, a lithium-transition metal composite oxide containing Ni, Co, Mn, Al or the like is used.

The negative electrode 12 has a negative electrode core, and a negative electrode mixture layer formed on at least one surface of the negative electrode core. For the negative electrode core, a foil of metal such as copper or a copper alloy, which is stable within a potential range of the negative electrode 12, a film in which such a metal is disposed on a surface layer thereof, or the like can be used. The negative electrode mixture layer includes a negative electrode active material, and a binder such as a styrenebutadiene rubber (SBR), and PVdF, and is preferably formed on each surface of the negative electrode core. For the negative electrode active material, for example, graphite, or a Si-containing compound is used.

The electrode assembly 14 is connected with a positive electrode lead 20 and two negative electrode leads 21a and 21b. The positive electrode lead 20 electrically connects the positive electrode 11 and the sealing assembly 17. The first negative electrode lead 21a is joined to a winding start-side end portion of the negative electrode 12, and electrically connects the winding start-side end portion and the bottom portion 31 of the housing can 16. The second negative electrode lead 21b is joined to a winding finish-side end portion of the negative electrode 12, and electrically connects the winding finish-side end portion and the bottom portion 31 of the housing can 16.

The positive electrode lead 20 extends toward the sealing assembly 17 side through an opening portion in an upper insulating plate 18, and is joined to a lower surface of the sealing assembly 17. The first negative electrode lead 21a passes through a through hole in a circular lower insulating plate 19, and is bent toward a hollow portion 14a of the electrode assembly 14. The second negative electrode lead 21b passes along the outside of the lower insulating plate 19, and is bent to overlap with the first negative electrode lead 21a. A stacked portion 50 in which the first negative electrode lead 21a and the second negative electrode lead 21b are axially stacked with the first negative electrode lead 21a located on the electrode assembly 14 side in the axial direction is formed between the electrode assembly 14 and the bottom portion 31 of the housing can 16.

The stacked portion 50 is welded to the bottom portion 31 of the housing can 16 using the resistance welder. Specifically, a welding rod serving as an upper electrode of the resistance welder is inserted into the hollow portion 14a of the electrode assembly 14, and a lower end portion of the welding rod is disposed on the first negative electrode lead 21a located at the upper side in the stacked portion 50. The lower electrode of the resistance welder is applied to a center of the bottom portion 31 of the housing can 16. Then, a voltage is applied between the pair of electrodes to cause a current to flow therebetween, so that contact portions between the first negative electrode lead 21a and the second negative electrode lead 21b are welded, and contact portions between the second negative electrode lead 21b and the bottom portion 31 of the housing can 16 are also welded. When the negative electrode leads 21a and 21b are joined to both end portions of the negative electrode 12 in the longitudinal direction, a current collecting path of the negative electrode 12 is shortened, so that an internal resistance of the cylindrical battery 10 is reduced. Note that the first negative electrode lead 21a may be joined to an intermediate portion such as a center portion of the negative electrode 12 in the longitudinal direction instead of the winding start-side end portion of the negative electrode 12.

The housing can 16 is generally made of metal including iron as a main component, and is made of, for example, a nickel-plated iron, whereas it may be made of metal including aluminum or the like as a main component. The housing can 16 has a cylindrical portion 39 and the bottom portion 31, and the cylindrical portion 39 includes the annular grooved portion 22, and the annular shoulder portion 29. The grooved portion 22 is formed by performing a spinning process on a part of the cylindrical portion 39 to produce a radially inward recess. The shoulder portion 29 is formed when an upper end portion (end portion on one side in the axial direction) of the cylindrical portion 39 is bent toward the radially inner side and is crimped onto a peripheral edge potion 33 of the sealing assembly 17, and extends toward the radially inner side at the upper end portion of the cylindrical portion 39.

The crimping fixes the sealing assembly 17 to the housing can 16 by holding the sealing assembly 17 between the shoulder portion 29 and the grooved portion 22 via the gasket 28. The grooved portion 22 is formed at a position away from the upper end of the housing can 16 by a predetermined length. The predetermined length is, for example, a length corresponding to greater than or equal to 1% and less than or equal to 20% of an axial length of the housing can 16.

The sealing assembly 17 has a structure in which a terminal plate 23, a lower vent member 24, an insulating plate 25, an upper vent member 26, and a sealing plate 27 are stacked in this order from the electrode assembly 14 side. Each member constituting the sealing assembly 17 has, for example, a disk shape or a ring shape, and each member except for the insulating plate 25 is electrically connected to each other. The sealing plate 27 has a projecting shape in which a radial center portion projects outwardly. A projections 27a of the sealing plate 27 includes an annular side wall and a flat top surface portion surrounded by the side wall. One or more vent holes 27b are formed in the top surface portion.

The lower vent member 24, the insulating plate 25, and the upper vent member 26 constitute a current interrupt device. The lower vent member 24 and the upper vent member 26 are connected to each other at respective center portions thereof, and the insulating plate 25 is interposed between the peripheral edge portions of the lower vent member 24 and the upper vent member 26. When an abnormality occurs in the cylindrical battery 10 and an internal pressure of the battery increases, the lower vent member 24 is deformed in such a manner to push up the upper vent member 26 toward the sealing plate 27 side, and ruptures, so that a current path between the lower vent member 24 and the upper vent member 26 is cut off. When the internal pressure further increases, the upper vent member 26 ruptures, and gas is discharged from the vent holes 27b in the sealing plate 27.

A case has been described where the sealing assembly 17 has a stacked structure including two rupture plates (the lower vent member 24 and the upper vent member 26), and has the projection-shaped sealing plate 27 that covers the rupture plates. However, the sealing assembly may be formed of only the rupture plates, or may have a structure in which an internal terminal plate, an insulating plate, and a rupture plate are stacked in this order from the electrode assembly side. Alternatively, the sealing assembly does not need to have the rupture plates, and the bottom portion of the housing can may have a thin easyto-rupture portion that ruptures when abnormal heat generation occurs in the battery.

The positive electrode lead 20 is made of a material having conductivity, and is made of, for example, aluminum or the like. The positive electrode lead 20 is connected to the positive electrode 11, whereas it is preferably joined directly to the positive electrode core by means of ultrasonic welding or the like, and a joining portion to the positive electrode core is preferably covered with an insulating tape. The positive electrode lead 20 is welded or connected to a lower surface of the terminal plate 23 by means of ultrasonic welding or the like, so that the sealing plate 27 which is a top plate of the sealing assembly 17 electrically connected to the terminal plate 23 serves as a positive electrode terminal.

Each of the negative electrode leads 21a and 21b is made of a material having conductivity, and is made of, for example, a cladding material in which a plate material of nickel, copper or nickel and a plate material of copper are bonded to each other. The negative electrode lead 21a, 21b is preferably joined directly to the negative electrode core by means of ultrasonic welding or the like, and a joining portion to the negative electrode core is preferably covered with an insulating tape. The housing can 16 to which the negative electrode leads 21a and 21b are joined serves as a negative electrode terminal.

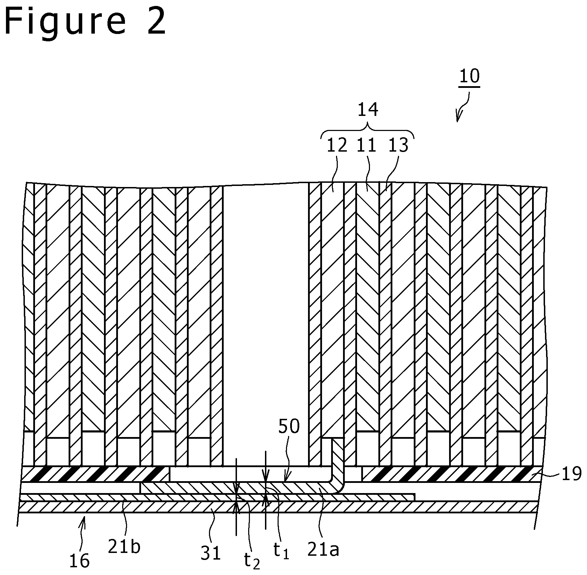

FIG. 2 is an expanded sectional view of the vicinity of the stacked portion 50 in FIG. 1. As illustrated in FIG. 2, a first thickness t1 of the first negative electrode lead 21a in the stacked portion 50 is larger than a second thickness t2 of the second negative electrode lead 21b in the stacked portion 50. When the stacked portion 50 of the two negative electrode leads 21a and 21b is welded to the bottom portion 31 of the housing can 16, stricter welding conditions than those in the case of one negative electrode lead being welded to the bottom portion of the housing can are required, such as causing larger current to flow between the stacked portion and the bottom portion of the housing can via the two electrodes (welding rods). However, the present inventors have found that it is not easy to appropriately weld the stacked portion to the bottom portion of the housing can because the negative electrode leads tend to stick to an electrode (welding rod) of the resistance welder only by making the welding conditions simply strict.

In such a background, as described later, the present inventors have found that when the above-described first thickness t1 is larger than the above-described second thickness t2, sticking of the first negative electrode lead 21a to the welding rod is reduced, so that the degree of freedom in the welding conditions for welding of the stacked portion 50 to the bottom portion 31 can be enhanced. Thus, according to the present embodiment, it is possible to provide the battery 10 that allows the stacked portion 50 of the two negative electrode leads 21a and 21b to be appropriately and easily welded to the bottom portion 31 of the housing can 16.

In order to effectively reduce the sticking of the negative electrode lead 21a to the welding rod and effectively achieve appropriate welding of the stacked portion 50 to the bottom portion 31, the first thickness t1 is preferably greater than or equal to 0.10 mm and less than or equal to 0.20 mm, and the second thickness t2 is preferably greater than or equal to 0.08 mm and less than or equal to 0.15 mm. In addition, in order to effectively achieve appropriate welding of the stacked portion 50 to the bottom portion 31 and effectively reduce the sticking to the welding rod, the first thickness t1 is preferably greater than or equal to 1.1 times and less than or equal to 1.9 times the second thickness t2.

### <Example>

In the battery 10 of the embodiment, a battery was produced in which in the stacked portion 30, the thickness of the first negative electrode lead 21a was 0.10 mm and the thickness of the second negative electrode lead 21b was 0.08 mm.

### <Comparative Example>

In comparison with the battery of Example, a battery was produced which was different only in that the thickness of the first negative electrode lead in the stacked portion and the thickness of the second negative electrode lead in the stacked portion each were 0.10 mm.

### (Welding Strength)

After ten samples were prepared for each of Example and Comparative Example, and in each sample, the stacked portion and the bottom portion of the housing can that were welded to each other were peeled off, it was investigated whether ingredients of the second negative electrode lead adhered to the bottom portion. Samples in which ingredients of the second negative electrode lead adhered to the bottom portion were determined as having sufficient welding strength, and the number of the samples was counted.

### (Sticking to Welding Rod)

When a current value of the resistance welding was changed, it was investigated, at each current value, whether the first negative electrode lead in the stacked portion stuck to the welding rod. The current values of 1, 1.15, and 1.25 were represented in Table 1 as relative values when the smallest current value was 1. In each current value, ten samples were prepared for each of Example and Comparative Example, and the number of samples in which the sticking to the welding rod did not occur was counted.

**[Table 1]**

| Current value | 1 | | 1.15 | | 1.25 | |
|---|---|---|---|---|---|---|
| | Welding strength | Sticking to welding rod | Welding strength | Sticking to welding rod | Welding strength | Sticking to welding rod |
| Example | 10/10 | 10/10 | 10/10 | 10/10 | 10/10 | 10/10 |
| | OK | OK | OK | OK | OK | OK |
| Comparative Example | 6/10 | 10/10 | 9/10 | 9/10 | 10/10 | 7/10 |
| | OK | OK | OK | OK | OK | OK |

As shown in Table 1, when the current value was 1, the sticking to the welding rod did not occur in all the samples for Example and Comparative Example, whereas it was confirmed that in Comparative Example in which the two negative electrode leads in the stacked portion had the same thickness, the welding defect occurrence rate reached 40%. Thus, as compared to Comparative Example, it was confirmed in Example that even when the current value of the resistance welding was small, it was easy to appropriately weld the stacked portion of the negative electrode leads to the bottom portion of the housing can.

When the current value was increased to 1.15, the sticking to the welding rod occurred in Comparative Example. In contrast, in Example, the sticking to the welding rod did not occur, even though the thickness of the stacked portion in Example was thinner than the thickness of the stacked portion in Comparative Example. Furthermore, even when the current value was greatly increased to 1.25, the sticking to the welding rod did not occur in Example.

That is, as compared to Comparative Example, it was confirmed in Example that it was possible to appropriately weld the stacked portion of the negative electrode leads to the bottom portion of the housing can in a wider range of welding conditions and to reduce the sticking of the negative electrode leads to the welding rod. Thus, it was confirmed that when the first thickness of the first negative electrode lead in the stacked portion was larger than the second thickness of the second negative electrode lead in the stacked portion, it was possible to appropriately and easily weld the stacked portion to the bottom portion of the housing can.

When the first thickness of the first negative electrode lead in the stacked portion is greater than or equal to 0.10 mm and less than or equal to 0.20 mm and the second thickness of the second negative electrode lead in the stacked portion is greater than or equal to 0.08 mm and less than or equal to 0.15 mm, it has been confirmed that it is possible to effectively achieve appropriate welding and effectively reduce the sticking to the welding rod. In addition, when the above-described first thickness t1 is greater than or equal to 1.1 times and less than or equal to 1.9 times the second thickness t2, it has been confirmed that it is possible to effectively achieve appropriate welding and effectively reduce the sticking to the welding rod.

### [Modification]

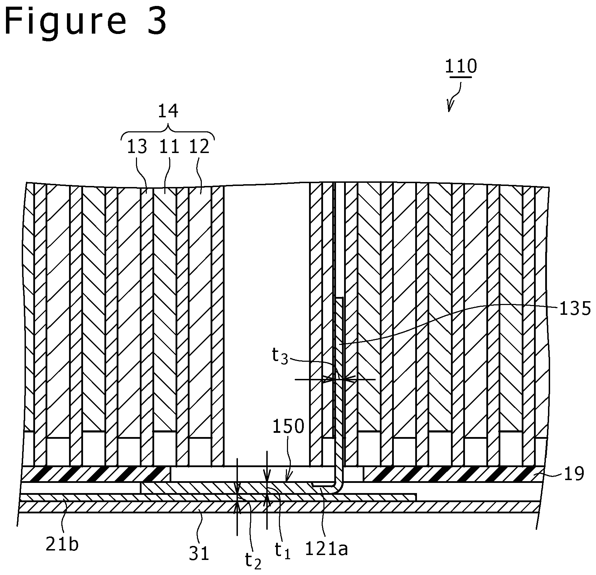

The present disclosure is not limited to the above embodiment and a modification thereof, and various improvements and changes are possible within the matters described in the claims of the present application and the equivalent scope thereof. FIG. 3 is an expanded axial sectional view of the vicinity of a stacked portion 150 in a battery 110 of the modification. As illustrated in FIG. 3, in the battery 110 of the modification, a first negative electrode lead 121a located at the upper side in the stacked portion 150 is joined to a winding start-side end portion of a negative electrode 12, and a second negative electrode lead 21b located at the lower side in the stacked portion 150 is joined to the winding start-side end portion of the negative electrode 12.

A thickness t3 of a facing portion 135 facing the negative electrode 12 in the first negative electrode lead 121a is smaller than a first thickness t1 of the first negative electrode lead 121a in the stacked portion 150. According to the battery 110, the thickness t3 of the facing portion 135 of the first negative electrode lead 121a that is joined to the winding start-side end portion of the negative electrode 12 where a curvature of an electrode assembly 14 is large is smaller than the first thickness t1, so that the electrode assembly 14 can exhibit a high degree of roundness and good battery characteristics such as a capacity retention ratio can be obtained.

In the above embodiment, a case has been described where the stacked portion 50 is welded to the bottom portion 31 by means of resistance welding. However, the stacked portion may be welded to the bottom portion of the housing can by means of laser welding. Even using the laser welding in which laser light is emitted from the can bottom side toward the upper side in the axial direction, when the thickness of the first negative electrode lead located at the upper side in the stacked portion is larger than the thickness of the second negative electrode lead located at the lower side in the stacked portion, the stacked portion can be appropriately welded to the bottom portion of the housing can while reducing perforation in the first negative electrode lead in the stacked portion and spatter generation on the upper side of the stacked portion.

In addition, the cylindrical battery of the present disclosure may have the following configurations.

Configuration 1: A cylindrical battery, comprising: an electrode assembly in which a positive electrode and a negative electrode are wound with a separator interposed between the positive electrode and the negative electrode; a bottomed cylindrical housing can that houses the electrode assembly; a sealing assembly that is crimp-fixed to an opening portion of the housing can via a gasket; and a first negative electrode lead and a second negative electrode lead that are joined to the negative electrode, wherein a stacked portion in which the first negative electrode lead and the second negative electrode lead are stacked in an axial direction with the first negative electrode lead located on a side of the electrode assembly is formed between the electrode assembly and a bottom portion of the housing can, the stacked portion is welded to the bottom portion of the housing can, and a first thickness of the first negative electrode lead in the stacked portion is larger than a second thickness of the second negative electrode lead in the stacked portion.

Configuration 2: The cylindrical battery described in configuration 1, wherein the first thickness is greater than or equal to 0.10 mm and less than or equal to 0.20 mm, and the second thickness is greater than or equal to 0.08 mm and less than or equal to 0.15 mm.

Configuration 3: The cylindrical battery described in configuration 1 or 2, wherein the first thickness is greater than or equal to 1.1 times and less than or equal to 1.9 times the second thickness.

Configuration 4: The cylindrical battery described in any one of configurations 1 to 3, wherein the first negative electrode lead is joined to a winding start-side end portion of the negative electrode, and the second negative electrode lead is joined to a winding finish-side end portion of the negative electrode.

Configuration 5: The cylindrical battery described in configuration 4, wherein a thickness of a facing portion facing the negative electrode in the first negative electrode lead is smaller than the first thickness.

### REFERENCE SIGNS LIST

10, 110 Battery, 11 Positive electrode, 12 Negative electrode, 13 Separator, 14 Electrode assembly, 14a Hollow portion, 16 Housing can, 17 Sealing assembly, 18 Upper insulating plate, 19 Lower insulating plate, 20 Positive electrode lead, 21a, 121a First negative electrode lead, 21b Second negative electrode lead, 22 Grooved portion, 23 Terminal plate, 24 Lower vent member, 25 Insulating plate, 26 Upper vent member, 27 Sealing plate, 27a Projections, 27b Vent hole, 28 Gasket, 29 Shoulder portion, 30 Stacked portion, 31 Bottom portion, 33 Peripheral edge portion 39 Cylindrical portion 50, 150 Stacked portion, 135 Facing portion, t1 First thickness, t2 Second thickness, t3 Thickness of facing portion

## Claims

1. A cylindrical battery, comprising:
an electrode assembly in which a positive electrode and a negative electrode are wound with a separator interposed between the positive electrode and the negative electrode;
a bottomed cylindrical housing can that houses the electrode assembly;
a sealing assembly that is crimp-fixed to an opening portion of the housing can via a gasket; and
a first negative electrode lead and a second negative electrode lead that are joined to the negative electrode, wherein
a stacked portion in which the first negative electrode lead and the second negative electrode lead are stacked in an axial direction with the first negative electrode lead located on a side of the electrode assembly is formed between the electrode assembly and a bottom portion of the housing can,
the stacked portion is welded to the bottom portion of the housing can, and
a first thickness of the first negative electrode lead in the stacked portion is larger than a second thickness of the second negative electrode lead in the stacked portion.

2. The cylindrical battery according to claim 1, wherein
the first thickness is greater than or equal to 0.10 mm and less than or equal to 0.20 mm, and the second thickness is greater than or equal to 0.08 mm and less than or equal to 0.15 mm.

3. The cylindrical battery according to claim 1 or 2, wherein
the first thickness is greater than or equal to 1.1 times and less than or equal to 1.9 times the second thickness.

4. The cylindrical battery according to claim 1 or 2, wherein
the first negative electrode lead is joined to a winding start-side end portion of the negative electrode, and the second negative electrode lead is joined to a winding finish-side end portion of the negative electrode.

5. The cylindrical battery according to claim 4, wherein
a thickness of a facing portion facing the negative electrode in the first negative electrode lead is smaller than the first thickness.
